# FASCICULE DE BREVET EUROPEEN

(11) **EP 4 597 922 B1**
(45) Date de publication et mention de la délivrance du brevet: **02.09.2026**
(21) Numéro de dépôt: 25183656.5
(22) Date de dépôt: 31.03.2023
(51) Int. Cl.: H04L 9/00, H04W 12/63, H04W 4/02, H04L 9/32, H04L 9/40, H04L 9/08, H04L 9/14, G06F 21/62

(54) **PROCÉDÉS, TERMINAL ET SERVEUR DE GESTION DE DONNÉES PERSONNELLES**
VERFAHREN, ENDGERÄT UND SERVER ZUR VERWALTUNG PERSÖNLICHER DATEN
PERSONAL DATA MANAGEMENT METHOD, PERSONAL DATA MANAGEMENT TERMINAL, AND PERSONAL DATA MANAGEMENT SERVER

(30) Priorité: 20.04.2022 FR 2203641
(43) Date de publication de la demande: 06.08.2025
(62) Numéro(s) de document de la (des) demande(s) initiale(s) en application de l'article 76 CBE: 23719823.9 / 4 512 034
(73) Titulaire: Pignela Capital SA, 1005 Lausanne (CH)
(72) Inventeur: REFFE, Nicolas, Sorede (FR)
(74) Mandataire: Cabinet Beau de Loménie

(56) Documents cités:
- US-A1- 2019 354 693
- US-A1- 2020 342 092
- US-A1- 2021 092 613
- US-B1- 11 075 891

## Description

### Technique antérieure

L'invention se rapporte au domaine général de la protection et de la gestion des données personnelles des utilisateurs dans un réseau de télécommunications.

Dans ce document, la « notion de données personnelles » est à comprendre au sens large et désigne toute donnée dont un utilisateur souhaite pouvoir garder la maîtrise.

A titre d'exemples non limitatifs, l'identité ou l'adresse d'une personne physique, les données d'une transaction bancaire effectuée par une personne physique ou morale, un message échangé sur un réseau de télécommunications, des données de géolocalisation d'un individu, des photographies ou des vidéos acquises par un individu ou reçues d'un tiers, un contrat numérique constituent des données personnelles au sens de l'invention.

Dans l'état actuel de la technique, les données personnelles d'un utilisateur sont généralement gérées par des fournisseurs de services auxquels souscrit l'utilisateur.

Par exemple, pour un utilisateur titulaire d'un compte en banque et d'un compte sur un réseau social, il est usuel que l'utilisateur fournisse d'une part des données personnelles à l'établissement bancaire et d'autre part des données personnelles à l'opérateur du réseau social.

Il en résulte que l'utilisateur perd la maîtrise de ses données personnelles, puisqu'il lui est très difficile de déterminer les traitements effectués par les fournisseurs de service sur ces données.

Les documents US2021/092613A1, US2019/354693A1, US11075891 B1 et US2020/342092A1 font partie de l'état de la technique.

### Exposé de l'invention

Selon un premier aspect, l'invention concerne un procédé de constitution d'un historique de données personnelles d'un utilisateur, ce procédé étant mis en œuvre par un terminal de l'utilisateur et comportant :
- une étape d'obtention d'une clé de chiffrement symétrique associée à un profil de l'utilisateur ;
- une étape de collecte de données personnelles de l'utilisateur ;
- au fur et à mesure de la collecte desdites données personnelles de l'utilisateur :
   (i) une étape de chiffrement de ces données personnelles avec la clé de chiffrement symétrique de l'utilisateur ; et
   (ii) une étape d'enregistrement, dans une base de données générale, de blocs comportant lesdites données chiffrées, lesdits blocs étant organisés selon une chaîne de blocs constituant un sous-graphe d'un graphe général dont la topologie est définie par un modèle de données préétabli, un bloc racine dudit sous-graphe étant associé à une donnée cryptographique propre à cet utilisateur.

Selon un deuxième aspect, l'invention concerne un procédé de gestion, mis en œuvre par un système informatique, pour gérer les données personnelles d'une pluralité d'utilisateurs, ce procédé comportant la gestion d'une base de données générale dans laquelle sont enregistrés des blocs, chaque bloc comportant desdites données personnelles chiffrées d'un dit utilisateur, lesdits blocs comportant les données personnelles chiffrées d'un même utilisateur étant organisés selon une chaîne de blocs constituant un sous-graphe d'un même graphe général dont la topologie est définie par un modèle de données préétabli, un bloc racine dudit sous-graphe étant associé à une donnée cryptographique propre à cet utilisateur.

Dans un mode de réalisation, la donnée cryptographique associée à un utilisateur est un jeton non fongible dynamique de cet utilisateur.

Dans un autre mode de réalisation, la donnée cryptographique associée à un utilisateur est la clé publique d'un portefeuille numérique (en anglais digital wallet) de cet utilisateur.

Ainsi, et d'une façon générale, l'invention propose de mémoriser un historique des données personnelles des utilisateurs dans une chaîne de blocs et d'associer l'historique des données personnelles à une donnée cryptographique propre à cet un utilisateur, par exemple à un jeton non fongible dynamique de cet utilisateur ou à la clé publique d'un portefeuille numérique détenu par cet utilisateur. Au sens de l'invention, les utilisateurs peuvent notamment être des personnes physiques ou morales.

Nous désignons ci-après par « portefeuille numérique » un dispositif matériel ou logiciel de stockage et de gestion sécurisée de fichiers numériques au sens large et de fichiers numériques associés de manière unique à un utilisateur, tels que des unités de crypto-monnaie et/ou des jetons nonfongibles. À ce titre, un portefeuille numérique comprend une clé publique associée à l'utilisateur. Un tel portefeuille numérique peut par exemple permettre d'effectuer des transactions électroniques avec une autre partie en échangeant des unités de crypto-monnaie.

Ainsi, conformément à l'invention une donnée cryptographique propre à un utilisateur, par exemple un jeton non fongible dynamique ou la clé publique d'un portefeuille numérique pointe sur le nœud d'entrée d'un graphe représentant l'historique des données personnelles de cet utilisateur (ou usager) selon une cartographie définie par le modèle de données préétabli.

Le fait d'associer l'ensemble des données personnelles dans un graphe de blocs permet, grâce à sa valeur probante, de garantir l'immuabilité de l'historique de ces données. Par ailleurs, lorsque la donnée cryptographique est un jeton non fongible dynamique, l'invention permett de garantir que l'utilisateur reste propriétaire de l'intégralité de ses données personnelles passées et à venir dès lors qu'elles sont intégrées dans la chaîne de blocs.

Le fait d'associer l'ensemble des données personnelles d'un utilisateur à une donnée cryptographique propre à l'utilisateur permet en outre à un utilisateur d'assurer la portabilité de ses données dans des environnements hétérogènes et de simplifier considérablement l'accès de cet utilisateur à de nouveaux services.

En effet, lorsqu'une connaissance d'un utilisateur (en anglais KYC, « Know Your Customer ») a été réalisée par la vérification de documents de cet utilisateur associé à une donnée cryptographique (jeton non fongible dynamique, clé publique d'un portefeuille numérique) dans un premier environnement (par exemple vérification d'identité, de credentials, d'éligibilité, ...) pour un premier service (par exemple à l'ouverture d'un compte bancaire) et que la preuve du résultat de cette vérification est intégrée aux données associées à cette donnée cryptographique, l'obtention de cette donnée cryptographique permet, dans un deuxième environnement, d'attribuer directement des droits à cet utilisateur pour un deuxième service (réservation d'un véhicule par exemple), sans recommencer la vérification de ses documents.

L'invention propose ainsi d'utiliser la donnée cryptographique propre à un utilisateur comme élément de preuve de l'identité de l'utilisateur. Lorsque la donnée cryptographique est un jeton non fongible cette donnée présente en outre les caractéristiques d'être non répudiable et infalsifiable. Le caractère non fongible du jeton garantit en outre que ce titre de propriété ne peut pas (contrairement à une signature numérique par exemple) être reproduit ou utilisé à l'insu de l'utilisateur.

L'utilisation d'une donnée cryptographique propre à l'utilisateur (jeton non fongible, clé publique de portefeuille numérique) dans l'invention permet de suivre l'activité d'une personne physique ou morale quel que soit l'environnement. Par exemple, si une donnée cryptographique, notamment un jeton non fongible, est détenue par un organisme de presse (personne morale) et que les contenus numériques produits par cet organisme de presse sont enregistrés dans le graphe général associé à cette donnée cryptographique, il est très simple, de n'importe quel environnement, de prouver qu'un de ces contenus numériques provient de cet organisme de presse.

Dans la mise en œuvre, la preuve de propriété constituée par une donnée cryptographique propre à l'utilisateur peut être gérée soit de façon explicite avec une identité visible de l'utilisateur personne physique ou morale, soit de façon totalement anonyme. Un utilisateur peut diffuser de l'information numérique reliée à une donnée cryptographique (jeton non fongible, clé publique de portefeuille numérique, ...) de façon anonyme, les tiers étant cependant en mesure de vérifier que cette information est bien associée à cette donnée cryptographique.

Dans un mode de réalisation, la chaîne de blocs est un registre distribué au sein d'un réseau de pairs, le terminal étant un pair dudit réseau configuré pour mémoriser localement au moins une partie dudit sous-graphe, lesdits blocs étant mémorisés dans une base de données locale dudit terminal.

La constitution et la consultation de l'historique de données personnelles d'un utilisateur par le terminal de cet utilisateur peuvent s'effectuer de façon asynchrone, hors réseau, et se resynchroniser sans dégradation des fonctionnalités et de la sécurité de la solution.

Dans un mode de réalisation, le modèle de données définit que des branches dudit sous-graphe comportent des blocs dont les données personnelles chiffrées correspondent à des données de géolocalisation horodatées dudit terminal au cours d'un déplacement détecté dudit terminal.

Dans ce mode de réalisation de l'invention, le terminal d'un utilisateur détecte les déplacements. Lorsqu'un nouveau déplacement est détecté, une nouvelle branche est créée dans le sous-graphe de l'utilisateur, des blocs chaînés comportant des données de géolocalisation horodatées chiffrées sont intégrés dans la branche au fur et à mesure du déplacement et lorsque la position du terminal est détectée inchangée pendant une durée prédéterminée, la branche s'arrête.

Dans un mode de réalisation, le modèle de données définit que des blocs dont les données personnelles chiffrées correspondent à une activité numérique du terminal à une date donnée ou à des données reçues d'un tiers à une date donnée est attaché, dans le sous-graphe de l'utilisateur, à un bloc dont les données personnelles chiffrées correspondent à des données de géolocalisation dudit terminal horodatées à ladite date donnée.

Ce mode de réalisation permet avantageusement de dater et de localiser l'ensemble des activités numériques d'un utilisateur. A titre d'exemple, il permet de garantir qu'une photographie acquise par le terminal d'un utilisateur a été acquise à une date donnée et alors que le terminal se trouvait à un endroit donné.

Dans un mode particulier de réalisation de l'invention, les données personnelles de géolocalisation peuvent être associées à des éléments de preuve de la présence du terminal à la position donnée à un instant donné, ces éléments de preuve étant par exemple des éléments de preuve signés et fournis par un opérateur de télécommunications capable de valider ces éléments par bornage.

Dans un mode de réalisation, le procédé de constitution des données personnelles d'un utilisateur comporte une étape d'intégration dans le sous-graphe d'un utilisateur, d'un contrat numérique auquel est partie cet utilisateur, le contrat étant chiffré par une clé publique du terminal de l'utilisateur, une clé publique d'au moins une autre partie au contrat et une clé publique d'un environnement de confiance numérique, ledit contrat comportant au moins :
- la clé de chiffrement symétrique de l'utilisateur chiffrée avec une clé publique de l'environnement de confiance numérique ; et
- des instructions pouvant être exécutées par ledit environnement de confiance numérique pour :
   (i) déchiffrer au moins une partie desdites données personnelles de l'utilisateur avec la clé de chiffrement symétrique ;
   (ii) vérifier que la donnée cryptographique propre à l'utilisateur associée au bloc racine du sous graphe appartient audit utilisateur ;
   (iii) analyser lesdites personnelles déchiffrées ; et
   (iv) fournir un résultat de ladite analyse à au moins une partie au contrat.

Dans ce mode de réalisation de l'invention, le procédé de gestion des données personnelles d'une pluralité d'utilisateurs comporte une étape de gestion d'un ensemble d'instances d'un environnement de confiance numérique, une dite instance étant configurée pour :
- exécuter des instructions définies dans un contrat numérique pour analyser une partie des données personnelles d'au moins un dit utilisateur partie au contrat, ledit contrat comportant une clé de chiffrement symétrique de ladite au moins une partie au contrat chiffrée avec une clé publique de ladite instance d'environnement de confiance numérique, ladite clé de chiffrement symétrique pouvant être utilisée par ladite instance pour déchiffrer lesdites données personnelles à analyser ;
- fournir un résultat de ladite analyse à au moins une partie au contrat.

Selon cet aspect, l'invention propose que les contrats qui analysent les données personnelles des utilisateurs soient exécutés dans un environnement de confiance, et non pas par les terminaux des parties au contrat pour ne pas exposer les données personnelles de ces parties. L'exécution dans un environnement de confiance est aussi connue de l'homme du métier sous l'expression anglaise « Confidential computing ».

Dans un mode préféré de réalisation, ces contrats intègrent des délégations d'accès aux données personnelles chiffrées à destination exclusive de l'environnement de confiance dans lequel ces données sont analysées, cet environnement de confiance étant configuré pour déchiffrer tout ou partie des données personnelles d'une partie au contrat, les analyser et transmettre les résultats de l'analyse à une ou plusieurs parties au contrat.

Ce mode de réalisation de l'invention permet avantageusement l'exécution de contrats entre des parties ayant des environnements hétérogènes. L'invention permet en particulier la portabilité des données d'un utilisateur dans le Metaverse (marque déposée), y compris l'exécution, dans le Metaverse, de contrats numériques nécessitant une analyse des données personnelles des parties au contrat tout en assurant la protection de ces données personnelles.

Dans un mode de réalisation, lorsque la donnée cryptographique propre à un utilisateur est une un jeton non fongible dynamique, le procédé de constitution d'un historique de données personnelles comporte une étape de génération d'au moins un deuxième jeton non fongible dynamique pour ledit utilisateur et une étape d'association d'un sous-graphe dudit sous-graphe audit deuxième jeton non fongible dynamique.

L'utilisateur propriétaire du jeton non fongible dynamique auquel est attachée la racine du sous-graphe comportant l'historique de ses données personnelles peut générer des jetons pointant sur une sous-partie de ce sous-graphe, par exemple sur une branche de ce sous-graphe.

Cette caractéristique permet avantageusement à l'utilisateur d'exploiter séparément une partie de son historique.

L'invention vise aussi un terminal comportant un processeur configuré pour mettre en œuvre:
- une étape d'obtention d'une clé de chiffrement symétrique associée à un profil de l'utilisateur ;
- une étape de collecte de données personnelles de l'utilisateur ; et
- au fur et à mesure de la collecte desdites données personnelles de l'utilisateur :
   (i) une étape de chiffrement de ces données personnelles avec la clé de chiffrement symétrique de cet utilisateur ; et
   (ii) une étape d'enregistrement , dans une base de données générale, de blocs comportant lesdites données chiffrées, lesdits blocs étant organisés selon une chaîne de blocs constituant un sous-graphe d'un graphe général dont la topologie est définie par un modèle de données préétabli, un bloc racine dudit sous-graphe étant associé à une donnée cryptographique propre à cet utilisateur (jeton non fongible dynamique, clé publique de portefeuille numérique).

L'invention vise aussi un serveur de gestion des données personnelles d'une pluralité d'utilisateurs, ce serveur comportant un processeur configuré pour gérer une base de données générale dans laquelle sont enregistrés des blocs, chaque bloc comportant des données personnelles chiffrées d'un utilisateur, les blocs comportant les données personnelles chiffrées d'un même utilisateur étant organisés selon une chaîne de blocs constituant un sous-graphe d'un même graphe général dont la topologie est définie par un modèle de données préétabli, un bloc racine dudit sous-graphe étant associé à une donnée cryptographique propre à cet utilisateur.

La base de données générale utilisée dans l'invention peut être centralisée (par exemple administrée par le serveur de gestion de données personnelles) ou distribuée.

L'invention vise également un programme d'ordinateur sur un support d'enregistrement, ce programme étant susceptible d'être mis en œuvre dans un ordinateur. Ce programme comporte des instructions adaptées à la mise en œuvre d'un procédé de constitution d'un historique de données personnelles tel que décrit ci-dessus.

L'invention vise également un programme d'ordinateur sur un support d'enregistrement, ce programme étant susceptible d'être mis en œuvre dans un ordinateur. Ce programme comporte des instructions adaptées à la mise en œuvre d'un procédé de gestion des données personnelles d'un ensemble d'utilisateurs tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier ou du deuxième ou du troisième programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution de l'un des procédés conformes à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente des terminaux, un serveur de gestion de données personnelles et des instances d'un environnement de confiance numérique pouvant être utilisés dans un mode particulier de mise en œuvre de l'invention;
[Fig. 2A] la figure 2A représente un graphe général pouvant être mis en œuvre dans un mode particulier de réalisation de l'invention ;
[Fig. 2B] la figure 2B représente un sous-graphe du graphe général de la figure 2A ;;
[Fig. 3A] la figure 3A illustre une proposition de contrat établie par une première partie;
[Fig. 3B] la figure 3B illustre un contrat formé après acceptation de la proposition de contrat de la figure 3A par une deuxième partie;
[Fig. 4] la figure 4 illustre la création d'un compte utilisateur dans un mode particulier de réalisation de l'invention;
[Fig. 5] la figure 5 représente les principales étapes mises en œuvre pour la constitution de l'historique de données personnelles d'un utilisateur ;
[Fig. 6] la figure 6 représente les principales étapes mises en œuvre par le terminal d'un utilisateur pour la consultation de données personnelles de cet utilisateur ;
[Fig. 7] la figure 7 représente les principales étapes mises en œuvre pour l'établissement d'un contrat ;
[Fig. 8] La figure 8 représente les principales étapes mises en œuvre pour l'exécution d'un contrat ;
[Fig. 9] la figure 9 représente l'architecture matérielle d'un terminal conforme à un mode particulier de réalisation de l'invention ; et
[Fig. 10] la figure 10 représente l'architecture matérielle d'un serveur conforme à un mode particulier de réalisation de l'invention ;

### Description des modes de réalisation

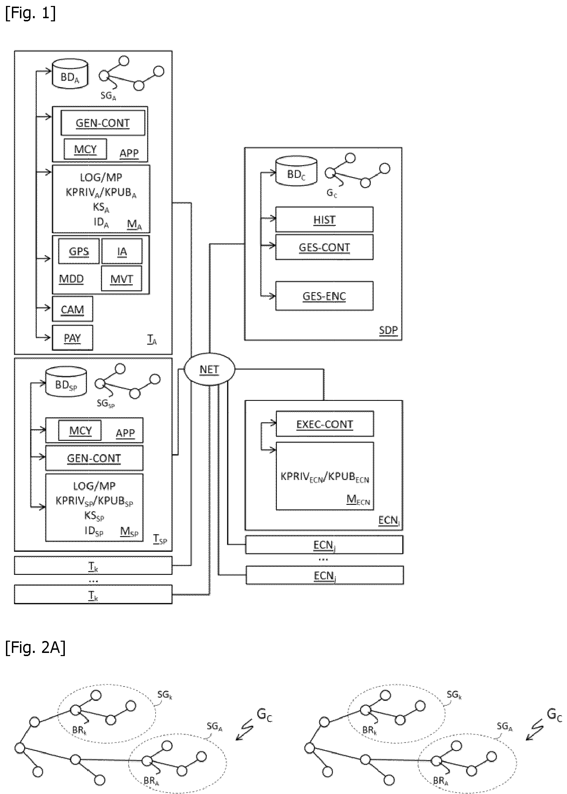

La figure 1 représente le terminal T_{A} d'un utilisateur A, le terminal T_{SP} d'un fournisseur de service SP, un serveur SDP de gestion des données personnelles d'une pluralité d'utilisateurs et des instances ECNᵢ d'un environnement de confiance numérique ECN reliés entre eux par un réseau de télécommunication NET.

Dans le mode de réalisation décrit ici, le serveur SDP de gestion de données personnelles est configuré pour offrir :
- un service HIST d'historisation de données personnelles ; et
- un service GES-CONT de gestion de contrats numériques utilisant tout ou partie de ces données personnelles.

Comme décrit en détails ci-après, le service HIST d'historisation de données personnelles permet, à un utilisateur qui souscrit à ce service de constituer et de maintenir, à partir de son terminal mobile, un historique de ses données personnelles, de donner à cet historique une valeur probante et d'assurer sa portabilité en associant cet historique à un jeton non fongible dynamique propriété de cet utilisateur.

Le service GES-CONT de gestion de contrat permet d'exécuter, dans un environnement de confiance numérique ECN, un contrat numérique passé entre au moins deux parties, sans exposer les données personnelles de ces parties. A cet effet, et comme décrit ultérieurement, les contrats numériques gérés par l'invention intègrent une délégation d'accès aux données personnelles de l'usager pour l'environnement de confiance numérique ECN.

Dans le mode de réalisation décrit ici, le serveur SDP de gestion des données personnelles comporte en outre un module GES-ECN de gestion de cet environnement de confiance numérique ECN.

Cet environnement de confiance numérique ECN constitue un environnement protégé (en anglais Trusted Execution Environment) dans lequel des contrats formés entre deux ou plusieurs parties (utilisateurs personnes physiques ou morales, fournisseurs de service, ...) peuvent être exécutés.

Dans le mode de réalisation décrit ici, le module GES-ECN de gestion d'un environnement de confiance numérique du serveur SDP de gestion de données personnelles est configuré pour administrer dynamiquement dans le réseau un nombre variable d'instances ECNᵢ, ECNⱼ de l'environnement de confiance numérique ECN en fonction du nombre de contrats à exécuter.

Dans le mode de réalisation décrit ici, ces instances ECNᵢ, ECNⱼ de l'environnement de confiance numérique sont clonées par le module GES-ECN. Ces instances clonées comportent toutes un même module EXEC-CONT pour exécuter un contrat et une même paire de clés comportant une clé publique KPUB_{ECN} et une clé privée associée KPRIV_{ECN} mémorisées dans une mémoire non volatile réinscriptible M_{ECN}.

Dans le mode de réalisation décrit ici, le terminal T_{A} est un téléphone mobile.

Nous supposerons dans cet exemple que l'utilisateur A a téléchargé et installé dans son terminal T_{A} une application APP auprès du serveur SDP de gestion de données personnelles, cette application permettant à l'utilisateur A d'accéder aux services offerts par le serveur, notamment au service HIST d'historisation de données personnelles et au service GES-CONT de gestion de contrats numériques.

L'application APP comporte un module cryptographique MCY.

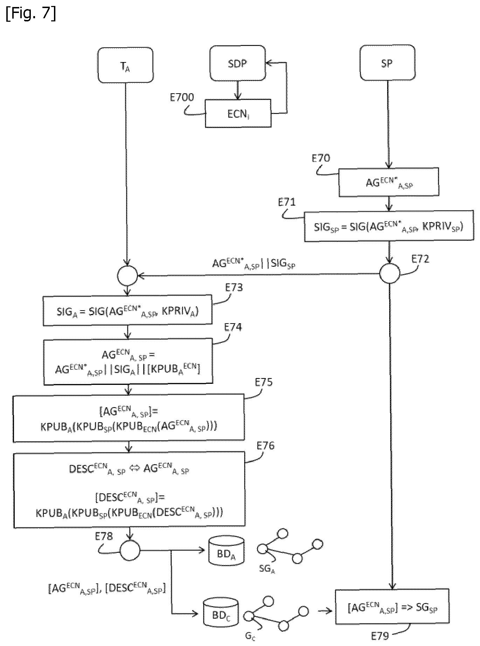

Dans le mode de réalisation décrit ici, nous supposerons que l'application APP comporte en outre un module GEN-CONT de génération de contrat permettant à l'utilisateur du terminal T_{A} de former avec une ou plusieurs autres parties des contrats destinés à être exécutés dans l'environnement de confiance numérique ECN. Ces opérations sont détaillées ultérieurement en référence à la figure 7.

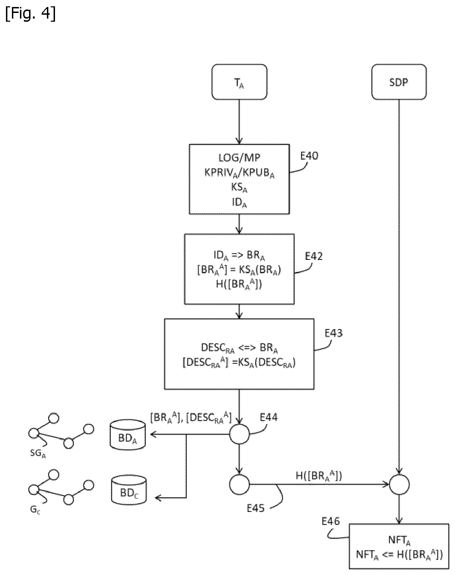

La figure 1 représente le terminal T_{A} après que l'utilisateur A a ouvert un compte auprès du serveur SDP de gestion de données personnelles pour souscrire au service HIST d'historisation de ses données personnelles. Des étapes E40 à E45 mises en œuvre par le terminal TA pour ouvrir ce compte seront décrites ultérieurement en référence à la figure 4. Suite à l'ouverture de ce compte, une mémoire non volatile réinscriptible M_{A} du terminal T_{A} comporte, dans cet exemple :
- des identifiants LOG/MP (login, mot de passe) pour permettre à l'utilisateur A d'accéder à son compte via l'application locale APP ;
- une paire de clés comportant une clé privée KPRIV_{A} et clé publique KPUB_{A} ;
- une clé de chiffrement symétrique KS_{A} ; et
- un identifiant unique confidentiel ID_{A}.

Dans le mode de réalisation décrit ici, le terminal T_{A} comporte un module MDD de détection des déplacements du terminal T_{A}.

Dans cet exemple, le module de détection de déplacements MDD comporte une intelligence artificielle IA, un module de géolocalisation GPS et un détecteur de mouvement MVT comportant par exemple un accéléromètre et un capteur gyroscopique pour mesurer l'accélération linéaire, l'orientation et la vitesse angulaire du terminal T_{A}.

Ce module de détection de déplacement MDD est configuré pour générer des données personnelles de géolocalisation horodatées DP_{GEO}^{A} de l'utilisateur A, ces données comportant des positions Pᵢ occupées par le terminal T_{A} dans le monde réel à des dates Tᵢ.

Dans le mode de réalisation décrit ici, le terminal T_{A} comporte également une caméra CAM et une application de payement PAY. On considèrera que les photographies acquises par la caméra CAM et que les transactions effectuées avec l'application PAY constituent des données personnelles DP_{DigAct}^{A} de l'utilisateur A représentatives d'activités numériques effectuées par l'utilisateur A. D'autres activités numériques peuvent être envisagées, par exemple l'envoi ou la réception de messages (courriers électroniques, messages courts, ...) effectués avec des applications de messagerie du terminal T_{A} non représentées.

Dans le mode de réalisation décrit ici, le terminal T_{A} est également configuré pour gérer des données personnelles DP_{3rdP}^{A} acquises de tiers, par exemple d'un service administratif, d'une banque, d'une assurance, d'un commerce, ...

D'une façon générale, on notera DP^{A} les données personnelles de l'utilisateur A, celles-ci pouvant par exemple comporter, et ce de façon non limitative, des données personnelles de géolocalisation DP_{GEO}^{A}, des données personnelles DP_{DigAct}^{A} représentatives d'activités numériques et des données personnelles DP_{3rdP}^{A} acquises de tiers.

Dans le mode de réalisation décrit ici, le serveur SDP comporte une base de données générale centralisée BD_{C} qui stocke l'historique des données personnelles chiffrées de tous les utilisateurs ayant souscrit au service HIST.

Dans le mode de réalisation décrit ici, les données personnelles chiffrées des utilisateurs sont organisées selon une chaîne de blocs n-dimensionnelle.

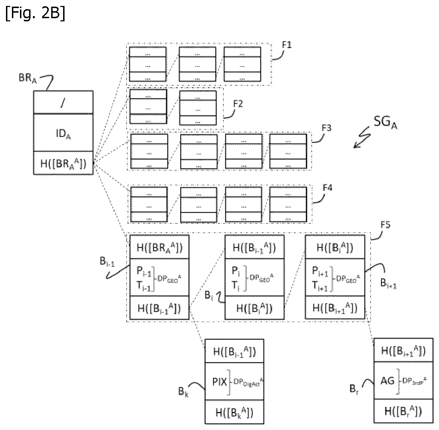

Dans le mode de réalisation décrit ici, cette chaîne de blocs n-dimensionnelle prend la forme d'un graphe acyclique direct général G_{C} dont la topologie est définie par un modèle de données préétabli qui sera décrit ci-après en référence aux figures 2A et 2B.

Cette chaîne de blocs constitue un registre distribué qui peut être mis à jour au sein d'un réseau de pairs.

Dans le mode de réalisation décrit ici, le terminal d'un utilisateur ayant souscrit au service HIST d'historisation de ses données personnelles est un pair de ce réseau. A titre d'exemple, le terminal T_{A} maintient localement :
- une base de données locale BD_{A} comportant ses propres données personnelles chiffrées ; et
- une copie d'un sous-graphe SG_{A} du graphe général G_{C} qui comporte l'historique de ses propres données personnelles DP^{A} chiffrées.

Le terminal T_{A} peut ainsi travailler hors ligne et de façon asynchrone en exploitant la propriété des graphes.

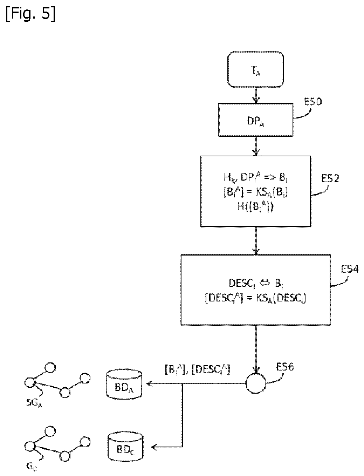

Ainsi, dans le mode de réalisation décrit ici, et comme décrit ultérieurement en référence à la figure 5, lorsque le terminal T_{A} détecte des nouvelles données personnelles DP^{A} à historier, celles-ci sont chiffrées par le module cryptographique MCY du terminal T_{A}, stockées dans la base BD_{A} de données locales du terminal T_{A}, intégrées par le terminal T_{A} au sous-graphe SG_{A} local au terminal T_{A} avant d'être synchronisées, lorsqu'une connexion le permet, avec la chaîne de blocs du graphe général G_{C}.

La synchronisation entre les pairs est assurée par la base de données générale BD_{C}. Lorsqu'un pair crée ou reçoit un nouveau bloc, il l'ajoute à sa copie du registre puis le transmet à ses nœuds pairs.

Quand ceux-ci le reçoivent, ils vérifient que ce nouveau bloc est valide. Si le bloc est valide, ils l'intègrent alors à leur registre et le transmettent à leur tour à leurs pairs.

La figure 2A illustre un exemple de graphe général G_{C} représentant l'organisation des données personnelles chiffrées de l'ensemble des utilisateurs T_{A}, Tₖ du service d'historisation HIST stockées dans la base de données générale BD_{C} gérée par le serveur SDP de gestion de données personnelles.

Dans l'exemple illustré ici, le graphe général G_{C} comporte notamment un sous-graphe SG_{A} qui représente l'organisation des données personnelles DP^{A} chiffrées de l'utilisateur A dans la base de données générale BD_{C} ou dans la base de données locale BD_{A}, en supposant que ces bases sont synchronisées.

Comme mentionné précédemment, la topologie du graphe général G_{C} (et donc en particulier du sous-graphe SG_{A}) est définie par un modèle de données préétabli.

La figure 2B illustre plus précisément le sous-graphe SG_{A} qui représente l'organisation des données personnelles DP^{A} chiffrées de l'utilisateur A conformément à un modèle de données particulier.

Dans le cas particulier de ce modèle de données, le sous-graphe SG_{A} est un graphe direct acyclique. Il comporte notamment une racine BR_{A} et un ensemble de branches constituées de blocs reliés entre eux par des arcs.

Dans le mode de réalisation décrit ici, le module de détection de déplacements MDD du terminal T_{A} est configuré pour détecter un type de déplacement du terminal T_{A} dans le monde réel, par exemple un déplacement en voiture ou un déplacement à pied.

Dans l'exemple de réalisation décrit ici, et conformément au modèle de données préétabli, le sous-graphe des données personnelles d'un utilisateur comporte notamment une branche pour chacun des déplacements détectés de cet utilisateur.

Par exemple, dans à la figure 2B :
- chacune des branches F1 à F3 comporte des blocs chiffrés comportant des données personnelles de géolocalisation horodatées DP_{GEO}^{A} acquises pendant un trajet en voiture détecté du terminal T_{A} ;
- chacune des branches F4 à F5 comporte des blocs chiffrés comportant des données personnelles de géolocalisation horodatées DP_{GEO}^{A} acquises pendant un trajet à pied détecté du terminal TA.

Cet exemple est non limitatif, et d'autres types de déplacements non représentés peuvent être envisagés.

Comme représenté plus précisément pour la branche F5, chaque banche associée à un déplacement comporte un ensemble de blocs, chaque bloc Bᵢ comportant une géolocalisation Pᵢ et une date Tᵢ, chiffrées qui indiquent qu'au cours du déplacement associé à cette branche F5, le terminal T_{A} a été localisé à la position Pᵢ à l'instant Tᵢ.

Lorsque le module de détection de déplacements MDD détecte qu'un déplacement est terminé, par exemple, lorsque la position du terminal T_{A} est détectée inchangée pendant une durée prédéterminée, la branche s'arrête. Si un nouveau déplacement est détecté, une nouvelle branche est créée.

Dans l'exemple de la figure 2B on a représenté plus en détails trois blocs Bᵢ₋₁, Bᵢ, Bᵢ₊₁ comportant des positions Pᵢ₋₁, Pᵢ, Pᵢ₊₁ à des instants successifs Tᵢ₋₁, Tᵢ, Tᵢ₊₁ du terminal T_{A} pendant un déplacement à pied. On note que comme conformément au mécanisme des chaînes de blocs, chaque bloc Bᵢ comporte en plus de ses propres données chiffrées, un haché de sortie H([Bᵢ₋₁^{A}]) du bloc précédent. Cette caractéristique des fonctions de hachage rend toute modification du contenu d'un bloc immédiatement visible dans les blocs suivants.

Conformément au modèle de données particulier décrit ici, les branches associées aux déplacements détectés du terminal d'un utilisateur constituent le squelette principal du sous-graphe d'un utilisateur.

Dans le mode de réalisation décrit ici, le sous-graphe SG_{A} peut également comporter des blocs comportant des données personnelles DP_{DigAct}^{A} chiffrées de l'utilisateur A acquises lors d'activités numériques effectuées par le terminal T_{A}.

Dans le mode de réalisation décrit ici, le sous-graphe SG_{A} peut également comporter des blocs comportant des données personnelles DP_{3rdP}^{A} chiffrées de l'utilisateur A acquises de tiers.

Dans le mode de réalisation décrit ici, un bloc comportant des données associées à une activité numérique ou reçues d'un tiers à une date donnée est attaché, dans le sous-graphe SG_{A} à un bloc comprenant cette date et la géolocalisation du terminal T_{A} à cette date.

Ainsi, à titre d'exemple, on a représenté, sur la figure 2B :
- un nœud Bₖ comportant une photographie PIX chiffrée acquise par la caméra CAM à l'instant Tᵢ₋₁ alors que le terminal se trouvait à la position Pᵢ₋₁ ;
- un nœud Bᵣ comportant un contrat AG chiffré reçu d'un tiers à l'instant Tᵢ₊₁ alors que le terminal se trouvait à la position Pᵢ₊₁.

Ce sous-graphe évolue dynamiquement, s'enrichissant des données personnelles de l'usager.

De façon très avantageuse, le sous-graphe SG_{A} de la chaîne de blocs comportant les données personnelles DP^{A} d'un utilisateur A, garantit l'immuabilité de l'historique de ces données et leur authenticité lorsqu'elles sont validées par un tiers de confiance externe.

De façon connue de l'homme du métier, pour donner au graphe sa valeur probante, il est nécessaire, par exemple à intervalles réguliers, y intégrer des données produites par un tiers de confiance externe (par exemple une autre chaîne de blocs). Par exemple, les terminaux peuvent transmettre le haché du dernier bloc du graphe à ce tiers de confiance, le tiers de confiance produit une information à partir de ce haché, et cette information signée par le tiers de confiance est intégrée dans le graphe.

Dans un mode particulier de réalisation, l'historique des données personnelles d'un utilisateur est attaché par le serveur SDP de gestion de données personnelles à un titre jeton non fongible dynamique.

Par exemple, et comme décrit ultérieurement, en référence à la figure 4, un haché de sortie du bloc racine du sous-graphe des données historiques d'un utilisateur peut être associé par le serveur SDP à une donnée cryptographique (par exemple un jeton non fongible dynamique ou la clé publique d'un portefeuille numérique) attribuée par ce serveur à cet utilisateur.

On décrit ci-après un mode de réalisation de l'invention dans lequel la donnée cryptographique propre à l'utilisateur est un jeton non fongible NFT_{A}, l'invention permettant ainsi à l'utilisateur de rattacher son historique de données personnelles à son jeton non fongible dynamique NFT_{A}.

Dans un mode particulier de réalisation de l'invention, l'utilisateur A, propriétaire du jeton non fongible dynamique NFT_{A} peut générer au moins un deuxième jeton non fongible NFT_{A}² et associer un sous-graphe de son sous-graphe SG_{A} à ce deuxième jeton non fongible.

Nous supposerons maintenant que l'utilisateur A et le fournisseur de service SP ont souscrit au service GES-CONT de gestion de contrats numériques et qu'ils souhaitent établir un contrat numérique AG^{ECN}_{A,SP} destiné à être exécuté par une instance ECNᵢ de l'environnement de confiance numérique ECN afin de ne pas exposer les données personnelles des parties au contrat lors d' l'exécution du contrat.

Nous supposerons que le terminal T_{SP} du fournisseur de service SP a téléchargé une application GEN-CONT de génération de contrat auprès du serveur SDP, compatible avec celle de l'application APP téléchargée par le terminal T_{A}.

Nous supposerons qu'un utilisateur du terminal SDP a utilisé l'application GEN-CONT pour ouvrir un compte auprès du serveur SDP de gestion de données personnelles pour souscrire au service GES-CONT de gestion de contrat

Suite à l'ouverture de ce compte, une mémoire non volatile réinscriptible M_{SP} du terminal T_{SP} comporte, dans cet exemple :
- des identifiants LOG/MP (login, mot de passe) pour permettre à l'utilisateur d'accéder à son compte via l'application locale GEN-CONT ;
- une paire de clés comportant une clé privée KPRIV_{SP} et clé publique KPUB_{SP} ;
- une clé de chiffrement symétrique KS_{SP} ; et
- un identifiant unique confidentiel ID_{SP}.

Dans le mode de réalisation décrit ici, le fournisseur de service SP utilise son application GEN-CONT pour établir une proposition de contrat notée AG^{ECN*}_{A,SP}. Dans le mode de réalisation décrit ici, les analyses à réaliser sur les données de l'usager, leur fréquence, la durée du contrat, le format des résultats, les règles de diffusion du résultat sont décrits explicitement dans la proposition de contrat.

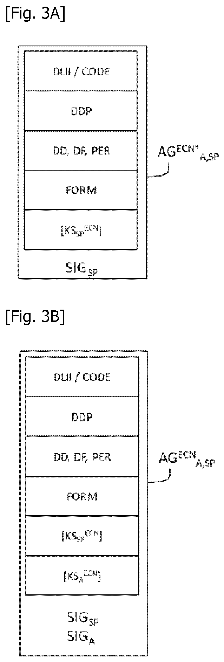

Un exemple de proposition de contrat AG^{ECN*}_{A, SP} est représenté à la figure 3A. Cette proposition comporte :
- une description littérale interprétable DLII par une instance ECNᵢ de l'environnement de confiance numérique ECN et/ou un code CODE exécutable par cette instance ECNᵢ pour effectuer des analyses sur des données personnelles DP^{A} de A ;
- une description DDP des données personnelles DP^{A} de A sur lesquelles l'environnement de confiance numérique ECN doit porter cette analyse, par exemple la catégorie des données personnelles (données horodatées de géolocalisation, photographies, messages, ...) et la plage de temps concernées (données personnelles détectées entre telle date et telle date ...)
- la date de début DD, la date de fin DF et une périodicité PER d'exécution du contrat ;
- un format FORM dans lequel l'environnement de confiance numérique doit retourner le résultat des analyses aux différentes parties A, SP ;
- la clé de chiffrement KS_{SP} de la partie SP chiffrée avec la clé publique KPUB_{ECN} commune aux instances ECNᵢ de l'environnement de confiance numérique configurée pour exécuter le contrat ; et
- une signature SIG_{SP} de cette proposition de contrat avec la clé privée KPRIV_{SP} du fournisseur de service.

La clé de chiffrement KS_{SP} chiffrée avec la clé publique KPUB_{ECN} est notée [KS_{SP}^{ECN}].

Lorsque le terminal T_{A} obtient cette proposition de contrat chiffrée, il vérifie la signature SIG_{SP} avec la clé publique KPUB_{SP} du fournisseur de service SP.

Si l'utilisateur A du terminal T_{A} accepte la proposition de contrat, il y insère sa clé de chiffrement KS_{A} chiffrée avec la clé publique KPUB_{ECN} commune aux instances ECNᵢ de l'environnement de confiance numérique, signe cette proposition complétée avec sa clé privée KPRIV_{A}, et insère sa signature SIG_{A} dans la proposition de contrat pour former le contrat AG^{ECN}_{A, SP}. La clé de chiffrement KS_{A} chiffrée avec la clé publique KPUB_{ECN} est notée [KS_{A}^{ECN}].

Le contrat AG^{ECN}_{A, SP} ainsi formé est représentée à la figure 3B. Il intègre des délégations aux données personnelles chiffrées des parties A et SP à destination exclusive des instances ECNᵢ de l'environnement de confiance numérique ECN dans lesquelles ces données sont analysées.

Dans le mode de réalisation décrit ici, le contrat AG^{ECN}_{A, SP} est signé avec les clés publiques KPUB_{A}, KPUB_{SP} des parties A et SP au contrat, et avec la clé publique KPUB_{ECN} communes à toutes les instances ECNᵢ de l'environnement de confiance numérique. Chacune des parties A et SP et une instance quelconque ECNᵢ de l'environnement de confiance numérique ECN peut ainsi déchiffrer le contrat en utilisant sa seule clé privée.

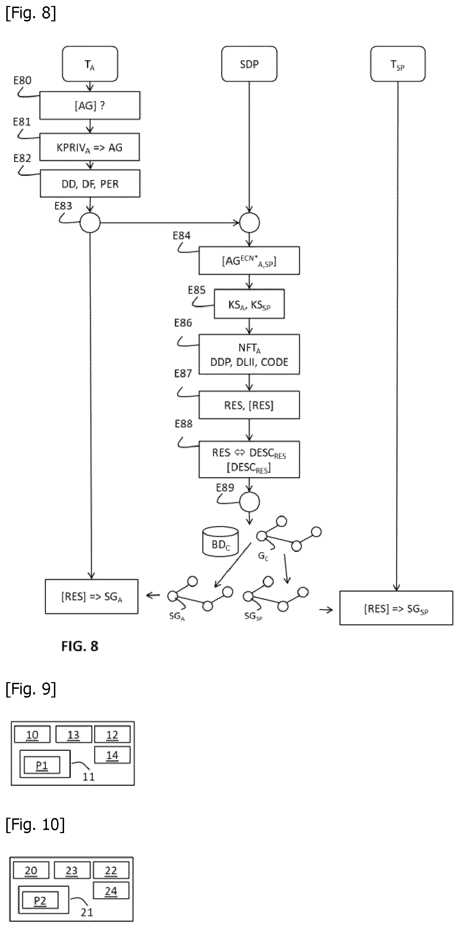

L'exécution du contrat par une instance de l'environnement de confiance numérique est décrite en référence à la figure 8.

La figure 4 illustre les principales étapes mises en œuvre dans un mode particulier de réalisation de l'invention pour créer le compte d'un utilisateur et pour lui attribuer un jeton non fongible dynamique. A titre illustratif, on considèrera la création du compte d'un utilisateur A à partir de son terminal T_{A} et la création de son jeton non fongible NFT_{A} par le serveur SDP de de gestion de données personnelles.

L'invention peut être transposée directement à d'autres modes de réalisation dans lequel la donnée cryptographique propre à l'utilisateur n'est pas un jeton non fongible dynamique, notamment lorsqu'elle est constituée par une clé publique d'un portefeuille numérique.

Au cours d'une étape E40, l'utilisateur A du terminal T_{A} créé son compte auprès du service HIST d'historisation de données personnelles fourni par le serveur SDP. Dans le mode de réalisation décrit ici, l'utilisateur A utilise à cet effet une application local APP préalablement téléchargée par son terminal T_{A} auprès du serveur SDP de gestion de données personnelles, pour obtenir et enregistrer dans la mémoire M_{A} du terminal T_{A}:
- des identifiants LOG/MP (login, mot de passe) pour accéder à son compte via l'application locale APP ;
- une paire de clés comportant une clé privée KPRIV_{A} et clé publique KPUB_{A} ;
- une clé de chiffrement symétrique KS_{A} ; et
- un identifiant unique confidentiel ID_{A}.

Ces éléments (identifiants, paire de clés, clé de chiffrement symétrique, identifiant unique) sont préférentiellement générés pas le terminal T_{A}, par exemple par l'application locale APP.

Ils sont préférentiellement mémorisés dans une mémoire M_{A} du terminal T_{A}.

Au cours d'une étape E42, le terminal T_{A} intègre son identifiant unique confidentiel ID_{A} dans le bloc racine BR_{A} de sa structure de données SG_{A}, et chiffre le bloc racine BR_{A} avec sa clé de chiffrement symétrique KS_{A}. On note [BR_{A}^{A}], ce bloc de données chiffrées. Un haché H([BR_{A}^{A}]) de sortie du bloc racine est calculé en appliquant la fonction de hachage H au bloc de données chiffrées [BR_{A}^{A}].

Au cours d'une étape E43, le bloc racine BR_{A} est associé avec un descripteur DESC_{RA} de ce bloc, lui aussi chiffré avec la clé de chiffrement symétrique KS_{A} du terminal T_{A}. On note [DESC_{RA}^{A}], ce descripteur chiffré.

Le descripteur DESC_{RA} du bloc racine BR_{A} est par exemple la chaîne de caractères « Bloc racine ». Ce descripteur permet à toute personne qui possède la clé de chiffrement symétrique KS_{A} de retrouver le bloc racine BR_{A} de la structure de données de l'utilisateur A.

Le choix du descripteur peut être quelconque. Cependant, dans un mode préféré de réalisation de l'invention le choix du descripteur est défini dans le modèle de données préétabli. Ce modèle contient par exemple une convention sur les descripteurs à utiliser.

Dans le mode de réalisation décrit ici, le bloc racine ne comporte pas de haché le reliant à un ou plusieurs blocs de données antérieures.

Au cours d'une étape E44, le bloc racine chiffré [BR_{A}^{A}] est mémorisé dans la base de données locales BD_{A} du terminal T_{A} en association avec son descripteur chiffré [DESC_{RA}^{A}]. Le bloc racine chiffrées [BR^{A}], et son descripteur chiffré associé [DESC_{RA}^{A}] sont envoyés au serveur SDP lorsqu'une connexion réseau est disponible. Ils sont enregistrés dans la base de données générale BD_{C} et le bloc racine chiffrées [BR^{A}] est synchronisé avec le graphe général G_{C}.

Au cours d'une étape E45, le terminal TA transmet le haché H([BR_{A}^{A}]) de sortie du bloc racine BR_{A} de son graphe SG_{A} au serveur SDP de gestion de données personnelles.

Au cours d'une étape E46, le serveur SDP de gestion de données personnelles créé un jeton non fongible dynamique NFT_{A} dont il accorde la propriété à l'utilisateur A et il associe le haché H([BR_{A}^{A}]) de sortie du bloc racine à ce jeton non fongible NFT_{A}.

On notera que le haché H([BR_{A}^{A}]) de sortie ne peut être retrouvé dans les différents blocs chiffrés et ne peut donc pas être associé aux données de l'utilisateur A à moins de détenir la clé de chiffrement symétrique KS_{A} de cet utilisateur.

La figure 5 représente les principales étapes mises en œuvre pour la constitution de l'historique de données personnelles DP^{A} d'un utilisateur, par exemple pour celles de l'utilisateur A.

Dans le mode de réalisation décrit ici, les données peuvent être de types quelconques. Elles peuvent par exemple être des données déclaratives, ou des données assorties d'éléments de preuves, par exemple d'une signature numérique, ou de liens sécurisés intégrés.

Comme mentionné précédemment, ces données personnelles DP^{A} peuvent être des données personnelles DP_{GEO}^{A} de géolocalisation horodatées du terminal T_{A}, acquises au cours de déplacements détectés du terminal TA, par exemple au cours d'activités de mobilité (marche, vélo, course à pied, déplacement en véhicule, ...). De telles données comportent par exemple des positions GPS Pᵢ₋₁, Pᵢ, Pᵢ₊₁ à des instants successifs Tᵢ₋₁, Tᵢ, Tᵢ₊₁ du terminal T_{A} pendant un déplacement.

Comme mentionné précédemment, ces données personnelles DP^{A} peuvent être des données personnelles DP_{DigAct}^{A} correspondant à des activités numériques effectuées sur le terminal T_{A}, par exemple la prise d'une photographie ou d'une vidéo, un échange de messagerie, une interaction avec une application du terminal T_{A}.

Comme mentionné précédemment, ces données personnelles DP^{A} peuvent être des données personnelles DP_{3rdP}^{A} acquises de tiers, par exemple d'un service administratif, d'une banque, d'une assurance, d'un commerce, ...

Dans le mode de réalisation décrit ici les données personnelles DP^{A} de l'utilisateur A sont intégrées automatiquement à l'historique de l'utilisateur, dès qu'elles sont détectées par le terminal T_{A}. En variante, au moins certaines données ne sont intégrées que sur autorisation expresse de l'utilisateur sur son terminal.

On suppose que le terminal TA détecte, au cours d'une étape E50, une donnée personnelle DPᵢ^{A} à intégrer à l'historique des données personnelle de l'utilisateur A.

Au cours d'une étape E52, la donnée personnelle DPᵢ^{A} est intégrée dans un bloc Bᵢ du graphe SG_{A}, la position de ce bloc dans le graphe étant définie par un modèle de données préétabli.

Comme décrit précédemment en référence à la figure 2, ce bloc Bᵢ comporte :
- sauf pour le bloc racine BR_{A}, le haché de sortie Hₖ de chacun des blocs Bₖ en amont du bloc Bᵢ dans le graphe SG_{A} ; et
- la donnée personnelle DPᵢ^{A}.

Le terminal T_{A} chiffre le bloc Bᵢ avec sa clé de chiffrement symétrique KS_{A}. On note [Bᵢ^{A}], ce bloc de données chiffrées. Un haché H([Bᵢ^{A}]) de sortie du bloc Bᵢ est calculé en appliquant la fonction de hachage H au bloc de données chiffrées [Bᵢ^{A}].

Au cours d'une étape E54, le bloc chiffré Bᵢ est associé avec un descripteur DESCᵢ de ce bloc, par exemple choisi conformément à la convention du modèle de données préétabli. Ce descripteur DESCᵢ est lui aussi chiffré avec la clé de chiffrement symétrique KS_{A} du terminal TA. On note [DESCᵢ^{A}], ce descripteur chiffré.

Par exemple :
- le descripteur DESCᵢ associé à un bloc de données Bᵢ comportant des données personnelles DP_{GEO}^{A} de géolocalisation horodatées du terminal T_{A}, acquises au cours d'un déplacement en voiture du terminal T_{A} le 4 juin 2021 peut être la chaîne de caractères « 2021/06/04 ∥ En voiture » ;
- le descripteur DESCᵢ associé à un bloc de données Bᵢ comportant des données personnelles DP_{DigAct}^{A} correspondant à une activité numérique du terminal T_{A} à le 27/07/2021 peut être la chaîne de caractères « 2021/07/27 ∥ photo » ou « 2021/07/27 ∥ mail » ;
- le descripteur DESCᵢ associé à un bloc de données Bᵢ comportant des données personnelles DP_{3rdP}^{A} acquises de tiers par le terminal T_{A} à le 08/04/2022 peut être la chaîne de caractères « 2022/04/08 ∥ banque ».

Au cours d'une étape E56, le bloc de données chiffrées [Bᵢ^{A}] est mémorisé dans la base de données locales BD_{A} du terminal T_{A} en association avec le descripteur chiffré [DESCᵢ^{A}]. Le bloc de données chiffrées [Bᵢ^{A}], associé au descripteur chiffré [DESCᵢ^{A}] est synchronisé avec le graphe général G_{C} lorsqu'une connexion réseau est disponible.

On notera que la totalité du graphe SG_{A} représentatif de l'historique des données personnelle de l'utilisateur A n'a pas à être stockée en permanence sur le terminal T_{A}. La mise à jour régulière d'une collection de blocs dans la base locale BD_{A} du terminal T_{A} peut par exemple être défini par le modèle de données et par l'état courant du graphe. La stratégie de conservation d'un historique partiel sur le terminal T_{A} peut dépendre de choix fonctionnels (données nécessaires au fonctionnement et à la constitution d'un historique non-répudiable) et de performance (latence accès blocs en base locale vs. accès en ligne).

La constitution et la consultation de l'historique de données personnelles DP^{A} par le terminal T_{A} peuvent s'effectuer de façon asynchrone, hors réseau, et se resynchroniser sans dégradation des fonctionnalités et de la sécurité de la solution.

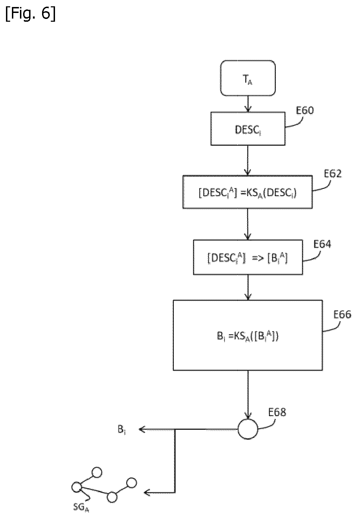

La figure 6 représente les principales étapes mises en œuvre par le terminal d'un utilisateur pour la consultation de données personnelles de cet utilisateur. On détaille à titre d'exemple les étapes mises en œuvre par le terminal T_{A} de l'utilisateur A pour la consultation de données personnelles DP^{A} de cet utilisateur.

On rappelle que tout bloc chiffré [Bᵢ^{A}] enregistré dans la chaîne de blocs, chiffré par une clé symétrique KS_{A}, est associé avec un descripteur [DESCᵢ^{A}] de ce bloc, chiffré lui aussi avec cette même clé de chiffrement symétrique KS_{A}.

Inversement, l'accès à un bloc de données Bᵢ se fait à partir du descripteur DESCᵢ associé.

Supposons que l'utilisateur A souhaite consulter les blocs associés à un descripteur DESCᵢ, par exemple constitué par la chaîne de caractères « 2021/06/04 ∥ En voiture ».

Au cours d'une étape E60, l'utilisateur choisit un descripteur conformément à la convention du modèle de données préétabli.

Au cours d'une étape E62, ce descripteur DESCᵢ est chiffré avec la clé symétrique KS_{A} de l'utilisateur pour produire un descripteur chiffré [DESCᵢ^{A}].

Au cours d'une étape E64, les blocs chiffrés [Bᵢ^{A}] correspondant au descripteur chiffré [DESCᵢ^{A}] sont identifiés.

Au cours d'une étape E66, les blocs chiffrés [Bᵢ^{A}] identifiés à l'étape précédente (E64) sont déchiffrés avec la clé symétrique KS_{A} du terminal T_{A} pour produire les blocs déchiffrés Bᵢ.

Selon les besoins de l'utilisateur, le contenu des blocs Bᵢ déchiffrés peut être présenté à l'utilisateur A au cours d'une étape E68. Le graphe SG_{A} des données personnelles DP^{A} peut être reconstitué en utilisant la hiérarchie (liens père-fils) entre les blocs du graphe SG_{A}, cette hiérarchie pouvant être déduite des hachés compris dans les blocs de données.

On notera que la s la structure du sous-graphe SG_{A} peut apparaître avant ou, avantageusement, après déchiffrement des données personnelles DP^{A}.

L'intégrité du graphe SG_{A} peut être vérifiée par le terminal T_{A}.

La figure 7 représente les principales étapes mises en œuvre pour l'établissement d'un contrat entre au moins deux parties. A titre d'exemple, on considère l'établissement d'un contrat AG^{ECN}_{A, SP} entre un utilisateur A et un fournisseur de service SP qui souhaite effectuer des analyses sur les données personnelles DP^{A} de A, ce contrat étant destiné à être exécuté dans un environnement de confiance numérique ECN.

Dans le mode de réalisation décrit ici, au cours d'une étape générale E700, le serveur SDP de gestion de données personnelles gère un ensemble d'instances ECNᵢ, ECNⱼ de l'environnement de confiance numérique clonées entre elles. Comme décrit précédemment, ces instances comportent toutes un même module EXEC-CONT pour exécuter un contrat et la même paire de clé publique KPUB_{ECN}, clé privée KPRIV_{ECN}. Dans le mode de réalisation décrit ici des instances sont créées ou détruites en fonction du nombre de contrats enregistrés dans le graphe général G_{C}.

Au cours d'une étape E70, la partie SP prépare une proposition de contrat AG^{ECN*}_{A, SP} entre la partie SP et la partie A.

Cette proposition de contrat AG^{ECN*}_{A, SP} comporte, comme représenté à la figure 3A :
- une description littérale interprétable par une instance ECNᵢ de l'environnement de confiance numérique ECN et/ou un code CODE qui sera exécuté par cette instance ECNᵢ pour effectuer des analyses sur des données personnelles DP^{A} de A ;
- une description littérale interprétable DLII par une instance ECNᵢ de l'environnement de confiance numérique ECN et/ou un code CODE exécutable par cette instance ECNᵢ pour effectuer des analyses sur des données personnelles DP^{A} de A ;
- une description DDP des données personnelles DP^{A} de A sur lesquelles l'environnement de confiance numérique ECN doit porter cette analyse, par exemple la catégorie des données personnelles (données horodatées de géolocalisation, photographies, messages, ...) et la plage de temps concernées (données personnelles détectées entre telle date et telle date ...)
- la date de début DD, la date de fin DF et une périodicité PER d'exécution du contrat ;
- un format FORM dans lequel l'environnement de confiance numérique doit retourner le résultat des analyses aux différentes parties A, SP ;
- la clé de chiffrement KS_{SP} de la partie SP chiffrée avec la clé publique KPUB_{ECN} commune aux instances ECNᵢ de l'environnement de confiance numérique configurée pour exécuter le contrat.

Au cours d'une étape E71, la partie SP signe la proposition de contrat AG^{ECN*}_{A, SP} avec sa clé privée KPRIV_{SP}. On note SIG_{SP} cette signature.

Au cours d'une étape E72, la partie SP transmet la proposition de contrat AG^{ECN*}_{A, SP} et la signature SIG_{SP} à la partie A.

Si la partie A accepte la proposition de contrat AG^{ECN*}_{A, SP}, au cours d'une étape E73, le terminal T_{A} signe la proposition de contrat AG^{ECN*}_{A, SP}, avec la clé privée KPRIV_{A} de A. On note SIG_{A} cette signature.

Au cours d'une étape E74, le terminal T_{A} insère cette signature SIG_{A} dans la proposition de contrat AG^{ECN*}_{A, SP} ainsi que sa publique KPUB_{A} chiffrée avec la clé publique KPUB_{ECN} commune aux différentes instances ECNᵢ de l'environnement de confiance numérique. La clé publique KPUB_{A} chiffrée avec la clé publique KPUB_{ECN} est notée [KPUB_{A}^{ECN}].

La proposition de contrat AG^{ECN*}_{A, SP} initiée par la partie SP et ainsi acceptée par la partie A peut alors être qualifiée de contrat AG^{ECN}_{A, SP} formé entre les parties A et SP.

Au cours d'une étape E75, le contrat AG^{ECN}_{A, SP} comportant les deux signatures SIG_{SP}, SIG_{A} est chiffré asymétriquement avec les clés publiques KPUB_{A}, KPUB_{SP} des parties A et SP et avec la clé publique KPUB_{ECN} commune aux différentes instances ECNᵢ de l'environnement de confiance numérique. On note [AG^{ECN}_{A, SP}] le contrat ainsi chiffré.

Au cours d'une étape E76, le contrat AG^{ECN}_{A, SP} est associé à un descripteur DESC^{ECN}_{A, SP}, par exemple la chaîne de caractères « Contrat entre A et SP ». Ce descripteur DESC^{ECN}_{A, SP} est chiffré avec les clés publiques KPUB_{A}, KPUB_{SP} des parties A, SP et avec la clé publique KPUB_{ECN} commune aux différentes instances ECNᵢ de l'environnement de confiance numérique. On note [DESC^{ECN}_{A, SP}] le descripteur ainsi chiffré.

Chacune des parties A et SP et une instance quelconque ECNᵢ de l'environnement de confiance numérique ECN peut ainsi déchiffrer le contrat en utilisant sa seule clé privée KPRIV_{A}, KPRIV_{SP}, KPRIV_{ECN}.

Au cours d'une étape E78, le contrat chiffré [AG^{ECN}_{A, SP}] et son descripteur chiffré [DESC^{ECN}_{A, SP}] sont intégrés au graphe SG_{A} de l'utilisateur A et au graphe général G_{C}.

Le contrat chiffré [AG^{ECN}_{A, SP}] est indistinguable dans le graphe général G_{C}.

Dans le mode de réalisation décrit ici, le serveur SP est notifié (E79) que le contrat chiffré [AG^{ECN}_{A, SP}] est disponible dans le graphe général GC et que ce contrat a été incorporé au graphe SG_{SP} de ce serveur.

La figure 8 représente les principales étapes mises en œuvre pour l'exécution d'un contrat conformément à un mode particulier de réalisation de l'invention. A titre d'exemple on considèrera la mise en œuvre d'un contrat AG^{ECN}_{A, SP} établi entre un utilisateur A et un fournisseur de service SP, ce contrat étant destiné à être exécuté par une instance ECNᵢ d'un environnement de confiance numérique.

Comme mentionné précédemment, les contrats chiffrées sont enregistrés dans les graphes SG_{A}, SG_{SP} des utilisateurs A, SP, ... et dans le graphe général G_{C}.

Dans un mode de réalisation de l'invention, ce sont les utilisateurs qui vérifient si des contrats apparaissent dans leur graphe SG_{A}, SG_{SP} ou dans le graphe général G_{C.} Pour cela, et comme décrit précédemment en référence à la figure 6, ils utilisent les descripteurs permettant d'identifier les contrats dans la chaîne de blocs, par exemple les descripteurs constitués par la chaîne de caractère « Contrat ».

En variante, ce sont les instances ECNᵢ de l'environnement de confiance numérique qui effectuent ces vérifications dans le graphe général G_{C}.

Au cours d'une étape E80 qui se répète par exemple à intervalles réguliers, le terminal T_{A} recherche, à partir de leurs descripteurs, si des contrats chiffré [AG] qui apparaissent dans son graphe SG_{A} ou dans le graphe général G_{C}.

Si le terminal TA identifie un contrat chiffré [AG^{ECN}_{A, SP}], il le déchiffre avec sa clé privée KPRIV_{A} au cours d'une étape E81.

Au cours d'une étape E82, le terminal T_{A} détermine à partie de la date DD de début du contrat, de la date DF de fin de contrat et de la périodicité PER du contrat si une exécution du contrat est programmée. Si c'est le cas, le terminal T_{A} le notifie à une instance ECNᵢ de l'environnement de confiance numérique au cours d'une étape E83.

Au cours d'une étape E84, cette une instance ECNᵢ de l'environnement de confiance numérique obtient le contrat chiffré [AG^{ECN}_{A, SP}] et le déchiffre avec sa clé privée KPRIV_{ECN}.

Comme décrit précédemment en référence à la figure 3B, le contrat chiffré AG^{ECN}_{A, SP} comporte les clés de chiffrement KS_{A}, KS_{SP} symétriques de chacune des parties chiffrées avec la clé publique KPUB_{ECN} de l'instance ECNᵢ (notées respectivement [KSA^{ECN}], [KS_{SP}^{ECN}]).

Au cours d'une étape E85, l'instance ECNᵢ déchiffre les clés de chiffrement chiffrées avec sa clé privée KPRIV_{ECN}, et obtient les clés de chiffrement KS_{A}, KS_{SP} de chacune des parties.

Le contrat est exécuté par l'instance ECNi de l'environnement de confiance numérique selon les termes du contrat.

Au cours d'une étape E86, l'instance ECNi détermine à partir de la description DDP quelles sont les données personnelles des parties sur lesquelles doit porter l'analyse puis elle effectue son analyse en interprétant la description littérale interprétable DLII ou en exécutant le code CODE compris dans le contrat. Au cours de cette analyse, les données personnelles des parties nécessaires sont déchiffrées par l'instance ECNᵢ avec les clés de chiffrement symétriques des parties.

En suivant les liens de parenté définis par les hachés de la chaîne de blocs pour le sous-graphe d'une partie, l'instance ECNᵢ peut vérifier que la donnée cryptographique propre à un utilisateur, par exemple le jeton non fongible NFT_{A} associé au bloc racine BR_{A} du sous graphe SG_{A} appartient à l'utilisateur A (par exemple associé à la clé publique KPUB_{A} de l'utilisateur A dans une base de données) et reconstituer l'intégralité de l'historique des données personnelles de cette partie et effectuer une analyse sur les données personnelles visées par la description DDP.

Au cours d'une étape E87, l'instance ECNᵢ formate le résultat RES de l'analyse selon le format FORM défini au contrat. Elle chiffre ce résultat avec les clés publiques KPUB_{A}, KPUB_{SP} des parties A, SP. On note [RES] le résultat ainsi chiffré.

Au cours d'une étape E88, le résultat RES est associé à un descripteur DESC_{RES}, par exemple la chaîne de caractères « Résultat d'exécution du Contrat entre A et SP ». Ce descripteur DESC_{RES} est chiffré avec les clés publiques KPUB_{A}, KPU_{SP} des parties A, SP. On note [DESC_{RES}] le descripteur ainsi chiffré.

Au cours d'une étape E89, le résultat chiffré [RES] et son descripteur chiffré [DESC_{RES}] sont intégrés au graphe général G_{C} et synchronisés avec les sous-graphes SG_{A}, SG_{SP} des parties au contrat, et les terminaux des parties sont notifiés.

Comme décrit précédemment en référence à la figure 4, lorsque l'utilisateur A du terminal T_{A} créé son compte auprès du service HIST d'historisation de données personnelles fourni par le serveur SDP, le **serveur SDP** de gestion de données personnelles créé une donnée cryptographique (par exemple un jeton non fongible dynamique NFT_{A} ou la clé publique d'un portefeuille numérique) dont il accorde la propriété à l'utilisateur A et il associe l'historique des données personnelles chiffrées à cette donnée cryptographique.

La figure 9 présente l'architecture matérielle d'un terminal conforme à l'invention. Il comprend notamment un processeur 10, une mémoire morte 11 (de type « ROM »), une mémoire non volatile réinscriptible 12 (de type « EEPROM » ou « Flash NAND » par exemple), une mémoire volatile réinscriptible 13 (de type « RAM »), et une interface de communication 14.

La mémoire morte 11 constitue un support d'enregistrement conforme à un exemple de mode de réalisation de l'invention, lisible par le processeur 10 et sur lequel est enregistré un premier programme d'ordinateur P1 conforme à un exemple de mode de réalisation de l'invention. En variante, le premier programme d'ordinateur P1 est stocké dans la mémoire non volatile réinscriptible 12.

Le premier programme d'ordinateur P1 permet au terminal de mettre en œuvre un procédé de constitution d'un historique de données personnelles conforme à l'invention.

La figure 10 présente l'architecture matérielle d'un serveur de gestion de données personnelles conforme à l'invention. Il comprend notamment un processeur 20, une mémoire morte 21 (de type « ROM »), une mémoire non volatile réinscriptible 22 (de type « EEPROM » ou « Flash NAND » par exemple), une mémoire volatile réinscriptible 23 (de type « RAM »), et une interface de communication 24.

La mémoire morte 21 constitue un support d'enregistrement conforme à un exemple de mode de réalisation de l'invention, lisible par le processeur 20 et sur lequel est enregistré un deuxième programme d'ordinateur P2 conforme à un exemple de mode de réalisation de l'invention. En variante, le deuxième programme d'ordinateur P2 est stocké dans la mémoire non volatile réinscriptible 12.

Le deuxième programme d'ordinateur P2 permet au serveur de gestion de données personnelles de mettre en œuvre un procédé de gestion des données personnelles d'une pluralité d'utilisateurs conforme à l'invention.

## Revendications

1. Procédé de constitution d'un historique de données personnelles (DP^{A}) d'un utilisateur (A), ce procédé étant mis en œuvre par un terminal (T_{A}) de l'utilisateur (A) et comportant :
- une étape (E40) d'obtention d'une clé de chiffrement symétrique (KS_{A}) associée à un profil de l'utilisateur (A) ;
- une étape (E50) de collecte de données personnelles (DP^{A}) de l'utilisateur ;
- au fur et à mesure de la collecte desdites données personnelles (DP^{A}) de l'utilisateur (A) :
(i) une étape (E52) de chiffrement de ces données personnelles avec la clé de chiffrement symétrique (KS_{A}) de cet utilisateur ; et
(ii) une étape d'enregistrement (E56), dans une base de données générale (BD_{C}), de blocs (Bᵢ) comportant lesdites données chiffrées ([B^{iA}]), lesdits blocs (Bᵢ) étant organisés selon une chaîne de blocs constituant un sous-graphe (SG_{A}) d'un graphe général (G_{C}) dont la topologie est définie par un modèle de données préétabli, un bloc racine (BR_{A}) dudit sous-graphe (SG_{A}) étant associé à une clé publique (KPUBWD_{A}) d'un portefeuille numérique, ladite clé (KPUBWD_{A}) étant attribuée à cet utilisateur (A).

2. Procédé de constitution d'un historique de données personnelles selon la revendication 1 dans lequel ladite chaîne de blocs est un registre distribué au sein d'un réseau de pairs, ledit terminal (T_{A}) étant un pair dudit réseau configuré pour mémoriser localement au moins une partie dudit sous-graphe (SG_{A}), lesdits blocs (Bᵢ) étant mémorisés dans une base de données locale (BD_{A}) dudit terminal (T_{A}).

3. Procédé de constitution d'un historique de données personnelles selon la revendication 1 ou 2, dans lequel ledit modèle de données définit que des branches dudit sous-graphe (SG_{A}) comportent des blocs (Bᵢ) dont les données personnelles chiffrées correspondent à des données de géolocalisation horodatées dudit terminal (T_{A}) au cours d'un déplacement détecté dudit terminal (T_{A}).

4. Procédé de constitution d'un historique de données personnelles selon la revendication 3, dans lequel ledit modèle de données définit que des blocs (Bₖ, Bᵣ) dont les données personnelles chiffrées correspondent à une activité numérique du terminal à une date donnée ou à des données reçues d'un tiers à une date donnée est attaché dans ledit sous-graphe (SG_{A}) à un bloc (Bᵢ) dont les données personnelles chiffrées correspondent à des données de géolocalisation dudit terminal (T_{A}) horodatées à ladite date donnée.

5. Procédé de constitution d'un historique de données personnelles selon l'une quelconque des revendications 1 à 4, ledit procédé comportant une étape (E78) d'intégration dans ledit sous-graphe (SG_{A}), d'un contrat numérique ([AG^{ECN}_{A, SP}]) auquel est partie ledit utilisateur (A), ledit contrat étant chiffré par une clé publique (KPUB_{A}) dudit terminal (T_{A}), une clé publique (KPUB_{SP}) d'au moins une autre partie au contrat et une clé publique (KPUB_{ECN}) d'un environnement de confiance numérique, ledit contrat comportant au moins :
- la clé de chiffrement symétrique ([KS_{A}]) de l'utilisateur (A) chiffrée avec une clé publique (KPUB_{ECN}) de l'environnement de confiance numérique ; et
- des instructions (DLII, CODE) pouvant être exécutées par ledit environnement de confiance numérique pour :
(i) déchiffrer au moins une partie desdites données personnelles (DP^{A}) dudit utilisateur avec ladite clé de chiffrement symétrique (KS_{A}) ;
(ii) vérifier que la clé publique (KPUBWD_{A}) de portefeuille numérique associée au bloc racine (BR_{A}) du sous graphe (SG_{A}) appartient audit utilisateur (A) ;
(iii) analyser lesdites données personnelles déchiffrées ; et
(iv) fournir un résultat de ladite analyse à au moins une partie au contrat.

6. Procédé de gestion, mis en œuvre par un serveur (SDP) de gestion des données personnelles d'une pluralité d'utilisateurs, ce procédé comportant la gestion d'une base de données générale (BD_{C}) dans laquelle sont enregistrés des blocs (Bᵢ), chaque bloc (Bᵢ) comportant desdites données personnelles d'un dit utilisateur chiffrées avec une clé de chiffrement symétrique (KS_{A}) de cet utilisateur, lesdits blocs (Bi) comportant les données personnelles chiffrées d'un même utilisateur étant organisés selon une chaîne de blocs constituant un sous-graphe (SG_{A}) d'un même graphe général (G_{C}) dont la topologie est définie par un modèle de données préétabli, un bloc racine (BR_{A}) dudit sous-graphe (SG_{A}) étant associé à une clé publique (KPUBWD_{A}) de portefeuille numérique de cet utilisateur (A).

7. Procédé de gestion selon la revendication 6, ledit procédé comportant une étape (E700) de gestion d'un ensemble d'instances d'un environnement de confiance numérique, une dite instance étant configurée pour :
- exécuter des instructions (DLII, CODE) définies dans un contrat numérique (AG^{ECN}_{A, SP}) pour analyser une partie desdites données personnelles (DP_{A}) d'au moins un dit utilisateur partie au contrat, ledit contrat comportant une clé de chiffrement symétrique ([KS_{A}]) de ladite au moins une partie au contrat chiffrée avec une clé publique (KPUB_{ECN}) de ladite instance d'environnement de confiance numérique, ladite clé de chiffrement symétrique (KS_{A}) pouvant être utilisée par ladite instance pour déchiffrer lesdites données personnelles à analyser ;
- fournir un résultat de ladite analyse à au moins une partie au contrat.

8. Terminal (T_{A}) comportant un processeur configuré pour mettre en œuvre:
- une étape d'obtention d'une clé de chiffrement symétrique (KS_{A}) associée à un profil de l'utilisateur (A) ;
- une étape de collecte de données personnelles (DP^{A}) de l'utilisateur ; et
- au fur et à mesure de la collecte desdites données personnelles (DP^{A}) de l'utilisateur (A) :
(i) une étape (E52) de chiffrement de ces données personnelles avec la clé de chiffrement symétrique (KS_{A}) de cet utilisateur ; et
(ii) une étape d'enregistrement (E56), dans une base de données générale (BD_{C}), de blocs (Bᵢ) comportant lesdites données chiffrées ([B^{iA}]), lesdits blocs (Bᵢ) étant organisés selon une chaîne de blocs constituant un sous-graphe (SG_{A}) d'un graphe général (G_{C}) dont la topologie est définie par un modèle de données préétabli, un bloc racine (BR_{A}) dudit sous-graphe (SG_{A}) étant associé à une clé publique (KPUBWD_{A}) d'un portefeuille numérique, ladite clé (KPUBWD_{A}) étant attribuée à cet utilisateur (A).

9. Serveur (SDP) de gestion des données personnelles d'une pluralité d'utilisateurs, ce serveur comportant un processeur configuré pour gérer une base de données générale (BD_{C}) dans laquelle sont enregistrés des blocs (Bᵢ), chaque bloc (Bᵢ) comportant desdites données personnelles d'un dit utilisateur chiffrées avec une clé de chiffrement symétrique (KS_{A}) de cet utilisateur, lesdits blocs (Bi) comportant les données personnelles chiffrées d'un même utilisateur étant organisés selon une chaîne de blocs constituant un sous-graphe (SG_{A}) d'un même graphe général (G_{C}) dont la topologie est définie par un modèle de données préétabli, un bloc racine (BR_{A}) dudit sous-graphe (SG_{A}) étant associé à une clé publique (KPUBWD_{A}) d'un portefeuille numérique, ladite clé (KPUBWD_{A}) étant attribuée à cet utilisateur (A).

10. Programme d'ordinateur (P1) comportant des instructions pour l'exécution d'un procédé de constitution d'un historique de données personnelles selon l'une des revendications 1 à 5 lorsque ledit programme est exécuté par un ordinateur.

11. Programme d'ordinateur (P2) comportant des instructions pour l'exécution d'un procédé de gestion des données personnelles d'une pluralité d'utilisateurs selon l'une des revendications 6 ou 7 lorsque ledit programme est exécuté par un ordinateur.

## Patentansprüche

1. Verfahren zum Aufbau eines Verlaufs personenbezogener Daten (DP^{A}) eines Benutzers (A), wobei dieses Verfahren von einem Endgerät (T_{A}) des Benutzers (A) durchgeführt wird und Folgendes umfasst:
- einen Schritt (E40) eines Erlangens eines symmetrischen Verschlüsselungsschlüssels (KS_{A}), der mit einem Profil des Benutzers (A) assoziiert ist;
- einen Schritt (E50) eines Sammelns personenbezogener Daten (DP^{A}) des Benutzers;
- im Zuge des Sammelns der genannten personenbezogenen Daten (DP^{A}) des Benutzers (A):
(i) einen Schritt (E52) eines Verschlüsselns dieser personenbezogenen Daten mit dem symmetrischen Verschlüsselungsschlüssel (KS_{A}) dieses Benutzers; und
(ii) (ii) einen Schritt (E56) eines Speicherns, in einer allgemeinen Datenbank (BD_{C}), von Blöcken (Bᵢ), die die genannten verschlüsselten Daten ([B^{iA}]) enthalten, wobei die genannten Blöcke (Bᵢ) gemäß einer Blockkette organisiert sind, die einen Teilgraphen (SG_{A}) eines allgemeinen Graphen (G_{C}) bildet, dessen Topologie durch ein vorgegebenes Datenmodell definiert ist, wobei ein Wurzelblock (BR_{A}) des genannten Teilgraphen (SG_{A}) mit einem öffentlichen Schlüssel (KPUBWD_{A}) einer digitalen Brieftasche assoziiert ist, wobei der Schlüssel (KPUBWD_{A}) diesem Benutzer (A) zugewiesen ist.

2. Verfahren zum Aufbauen eines Verlaufs personenbezogener Daten nach Anspruch 1, wobei die Blockkette ein verteiltes Register innerhalb eines Peer-to-Peer-Netzwerks ist, wobei das Endgerät (T_{A}) ein Peer des Netzwerks ist, der konfiguriert ist, um lokal zumindest einen Teil des Teilgraphen (SG_{A}) zu speichern, wobei die Blöcke (Bᵢ) in einer lokalen Datenbank (BD_{A}) des Endgeräts (T_{A}) gespeichert sind.

3. Verfahren zum Aufbauen eines Verlaufs personenbezogener Daten nach Anspruch 1 oder 2, wobei das Datenmodell definiert, dass Zweige des Teilgraphen (SG_{A}) Blöcke (Bᵢ) enthalten, deren verschlüsselte personenbezogene Daten zeitgestempelte Geolokalisierungsdaten des Endgeräts (T_{A}) während einer erkannten Bewegung des Endgeräts (T_{A}) entsprechen.

4. Verfahren zum Aufbauen eines Verlaufs personenbezogener Daten nach Anspruch 3, wobei das Datenmodell definiert, dass Blöcke (Bₖ, Bᵣ), deren verschlüsselte personenbezogene Daten einer digitalen Aktivität des Endgeräts an einem bestimmten Datum oder von einem Dritten an einem bestimmten Datum empfangenen Daten entsprechen, in dem Teilgraphen (SG_{A}) an einen Block (Bᵢ) angehängt sind, dessen verschlüsselte personenbezogene Daten zeitgestempelte Geolokalisierungsdaten des Endgeräts (T_{A}) an dem bestimmten Datum entsprechen.

5. Verfahren zum Aufbau eines Verlaufs personenbezogener Daten nach einem der Ansprüche 1 bis 4, wobei das Verfahren einen Schritt (E78) einer Integration in den Teilgraphen (SG_{A}) eines digitalen Vertrags (AG^{ECN}_{A, SP}) umfasst, an dem der genannte Benutzer (A) beteiligt ist, wobei der Vertrag mit einem öffentlichen Schlüssel (KPUB_{A}) des Endgeräts (T_{A}), einem öffentlichen Schlüssel (KPUB_{SP}) von mindestens einer weiteren Vertragspartei und einem öffentlichen Schlüssel (KPUB_{ECN}) einer digitalen Vertrauensumgebung verschlüsselt ist, der Vertrag zumindest umfassend:
- den symmetrischen Verschlüsselungsschlüssel ([KS_{A}]) des Benutzers (A), verschlüsselt mit einem öffentlichen Schlüssel (KPUB_{ECN}) der digitalen Vertrauensumgebung; und
- Anweisungen (DLII, CODE), die von der digitalen Vertrauensumgebung ausgeführt werden können, um:
(i) Entschlüsseln zumindest eines Teils der personenbezogenen Daten (DP^{A}) des genannten Benutzers mit dem symmetrischen Verschlüsselungsschlüssel (KS_{A});
(ii) Überprüfen, dass der öffentliche Schlüssel (KPUBWD_{A}) der digitalen Brieftasche, der mit dem Wurzelblock (BR_{A}) des Teilgraphen (SG_{A}) assoziiert ist, dem Benutzer (A) gehört;
(iii) Analysieren der entschlüsselten personenbezogenen Daten; und
(iv) Bereitstellen eines Resultats der Analyse an mindestens eine Vertragspartei.

6. Verwaltungsverfahren, durchgeführt von einem Server (SDP) zur Verwaltung personenbezogener Daten einer Vielzahl von Benutzern, wobei das Verfahren die Verwaltung einer allgemeinen Datenbank (BD_{C}) umfasst, in der Blöcke (Bᵢ) gespeichert sind, wobei jeder Block (Bᵢ) die personenbezogenen Daten eines Benutzers enthält, verschlüsselt mit einem symmetrischen Verschlüsselungsschlüssel (KS_{A}) dieses Benutzers, wobei die Blöcke (Bᵢ), die die verschlüsselten personenbezogenen Daten desselben Benutzers enthalten, gemäß einer Blockkette organisiert sind, die einen Teilgraphen (SG_{A}) desselben allgemeinen Graphen (G_{C}) bildet, dessen Topologie durch ein vorgegebenes Datenmodell definiert ist, wobei ein Wurzelblock (BR_{A}) des Teilgraphen (SG_{A}) mit einem öffentlichen Schlüssel (KPUBWD_{A}) einer digitalen Brieftasche dieses Benutzers (A) assoziiert ist.

7. Verwaltungsverfahren nach Anspruch 6, wobei das Verfahren einen Schritt (E700) eines Verwaltens einer Menge von Instanzen einer digitalen Vertrauensumgebung umfasst, wobei eine Instanz zu Folgendem konfiguriert ist:
- Ausführen von Anweisungen (DLII, CODE), die in einem digitalen Vertrag (AG^{ECN}_{A, SP}) definiert sind, um einen Teil der personenbezogenen Daten (DP_{A}) von mindestens einem Benutzer, der Vertragspartei ist, zu analysieren, wobei der Vertrag einen symmetrischen Verschlüsselungsschlüssel ([KS_{A}]) der mindestens einen Vertragspartei enthält, verschlüsselt mit einem öffentlichen Schlüssel (KPUB_{ECN}) der Instanz der digitalen Vertrauensumgebung, wobei der symmetrische Verschlüsselungsschlüssel (KS_{A}) von der Instanz zum Entschlüsseln der zu analysierenden personenbezogenen Daten verwendet werden kann;
- Bereitstellen eines Resultats der Analyse an mindestens eine Vertragspartei.

8. Endgerät (T_{A}), umfassend einen Prozessor, der konfiguriert ist, um Folgendes durchzuführen:
- einen Schritt eines Erlangens eines symmetrischen Verschlüsselungsschlüssels (KS_{A}), der mit einem Profil des Benutzers (A) assoziiert ist;
- einen Schritt eines Sammelns personenbezogener Daten (DP^{A}) des Benutzers; und
- im Zuge des Sammelns der personenbezogenen Daten (DP^{A}) des Benutzers (A):
(i) einen Schritt (E52) eines Verschlüsselns der personenbezogenen Daten mit dem symmetrischen Verschlüsselungsschlüssel (KS_{A}) dieses Benutzers; und
(ii) einen Schritt (E56) eines Speicherns, in einer allgemeinen Datenbank (BD_{C}), von Blöcken (Bᵢ), die die verschlüsselten Daten ([B^{iA}]) enthalten, wobei die Blöcke (Bᵢ) gemäß einer Blockkette organisiert sind, die einen Teilgraphen (SG_{A}) eines allgemeinen Graphen (G_{C}) bildet, dessen Topologie durch ein vorgegebenes Datenmodell definiert ist, wobei ein Wurzelblock (BR_{A}) des Teilgraphen (SG_{A}) mit einem öffentlichen Schlüssel (KPUBWD_{A}) einer digitalen Brieftasche assoziiert ist, wobei der Schlüssel (KPUBWD_{A}) diesem Benutzer (A) zugewiesen ist.

9. Server (SDP) zur Verwaltung personenbezogener Daten einer Vielzahl von Benutzern, wobei dieser Server einen Prozessor umfasst, der konfiguriert ist, um eine allgemeine Datenbank (BD_{C}) zu verwalten, in der Blöcke (Bᵢ) gespeichert sind, wobei jeder Block (Bᵢ) die personenbezogenen Daten eines Benutzers enthält, verschlüsselt mit einem symmetrischen Verschlüsselungsschlüssel (KS_{A}) dieses Benutzers, wobei die Blöcke (Bᵢ), die die verschlüsselten personenbezogenen Daten desselben Benutzers enthalten, gemäß einer Blockkette organisiert sind, die einen Teilgraphen (SG_{A}) desselben allgemeinen Graphen (G_{C}) bildet, dessen Topologie durch ein vorgegebenes Datenmodell definiert ist, wobei ein Wurzelblock (BR_{A}) des Teilgraphen (SG_{A}) mit einem öffentlichen Schlüssel (KPUBWD_{A}) einer digitalen Brieftasche assoziiert ist, wobei der Schlüssel (KPUBWD_{A}) diesem Benutzer (A) zugewiesen ist.

10. Computerprogramm (P1), umfassend Anweisungen zum Ausführen eines Verfahrens zum Aufbauen eines Verlaufs personenbezogener Daten nach einem der Ansprüche 1 bis 5 enthält, wenn das Programm von einem Computer ausgeführt wird.

11. Computerprogramm (P2), umfassend Anweisungen zum Ausführen eines Verfahrens zur Verwaltung personenbezogener Daten einer Vielzahl von Benutzern nach einem der Ansprüche 6 oder 7, wenn das Programm von einem Computer ausgeführt wird.

## Claims

1. A process for constitution of a history of personal data (DP^{A}2. of a user (A), this process being executed by a terminal (T_{A}) of the user (A) and comprising :
- a step (E40) for obtaining asymmetric encryption key (KS_{A}) associated with a profile of the user (A);
- a step (E50) for collecting personal data (DP^{A}) of the user ;
- throughout the collection of said personal data (DP^{A}) of the user (A) :
(i) a step (E52) for encryption of these personal data with the symmetric encryption key (KS_{A}) of this user; and
(ii) a recording step (E56), in a general database (BD_{C}), of blocks (Bᵢ) comprising said encrypted data ([B^{iA}]), said blocks (Bᵢ) being organised according to a block chain constituting a sub-graph (SG_{A}) of a general graph (G_{C}) whereof the topology is defined by a preset data model, a root block (BR_{A}) of said sub-graph (SG_{A}) being associated with a public key (KPUBWD_{A}) of a digital wallet, said key (KPUBWD_{A}) being attributed to this user (A).

2. The process for constitution of a history of personal data according to claim 1 wherein said block chain is a distributed register within a peer network, said terminal (T_{A}) being a peer of said network configured to store locally at least one part of said sub-graph (SG_{A}), said blocks (Bᵢ) being stored in a local database (BD_{A}) of said terminal (T_{A}).

3. The process for constitution of a history of personal data according to claim 1 or 2, wherein said data model defines how branches of said sub-graph (SG_{A}) comprise blocks (Bᵢ) whereof the personal encrypted data correspond to timestamped geolocation data of said terminal (T_{A}) during detected displacement of said terminal (T_{A}).

4. The process for constitution of a history of personal data according to claim 3, wherein said data model defines how blocks (Bₖ, Bᵣ) whereof the personal encrypted data correspond to digital activity of the terminal on a given date or to data received from a third party on a given date is attached in said sub-graph (SG_{A}) to a block (Bᵢ) whereof the personal encrypted data correspond to geolocation data of said terminal (T_{A}) timestamped on said given date.

5. The process for constitution of a history of personal data according to any one of claims 1 to 4, said process comprising a step (E78) for integration in said sub-graph (SG_{A}) of a digital contract ([AG^{ECN}_{A, SP}]) to which said user (A) is party, said contract being encrypted by a public key (KPUB_{A}) of said terminal (T_{A}), a public key (KPUB_{SP}) of at least one other party to the contract and a public key (KPUB_{ECN}) of a digital trust environment, said contract comprising at least:
- the symmetric encryption key ([KS_{A}]) of the user(A) encrypted with a public key (KPUB_{ECN}) of the digital trust environment; and
- instructions (DLII, CODE) able to be executed by said digital trust environment to :
(i) decrypt at least some of said personal data (DP^{A}) of said user with said symmetric encryption key (KS_{A}) ;
(ii) verify that the public key (KPUBWD_{A}) of digital wallet associated with the root block (BR_{A}) of the sub-graph (SG_{A}) belongs to said user (A) ;
(iii) analyse said deciphered personal data; and
(iv) provide a result of said analysis to at least one party to the contract.

6. A management process, executed by a server (SDP) for management of personal data of a plurality of users, this process comprising the management of a general database (BD_{C}) in which blocks (Bᵢ) are recorded, each block (Bᵢ) comprising said personal data of a said user encrypted with a symmetric encryption key (KS_{A}) of this user, said blocks (Bᵢ) comprising the personal encrypted data of the same user being organised according to a block chain constituting a sub-graph (SG_{A}) of the same general graph (G_{C}) whereof the topology is defined by a preset data model, a root block (BR_{A}) of said sub-graph (SG_{A}) being associated with a public key (KPUBWD_{A}) of a digital wallet of this user (A).

7. The management process according to claim 6, said process comprising a step (E700) for management of a set of instances of a digital trust environment, a said instance being configured to:
- execute instructions (DLII, CODE) defined in a digital contract (AG^{ECN}_{A, SP}) for analysing some of said personal data (DP_{A}) of at least a said user party to the contract, said contract comprising a symmetric encryption key ([KS_{A}]) of said at least one party to the contract encrypted with a public key (KPUB_{ECN}) of said instance of digital trust environment, said symmetric encryption key (KS_{A}) able to be utilised by said instance to decrypt said personal data to be analysed ;
- provide a result of said analysis to at least one party to the contract.

8. A terminal (T_{A}10. comprising a processor configured to perform:
- a step for obtaining a symmetric encryption key (KS_{A}) associated with a profile of the user (A) ;
- a step for collecting personal data (DP^{A}) of the user; and
- throughout the collection of said personal data (DP^{A}) of the user (A) :
(i) a step (E52) for encryption of these personal data with the symmetric encryption key (KS_{A}) of this user; and
(ii) a recording step (E56), in a general database (BD_{C}), of blocks (Bᵢ) comprising said encrypted data ([B^{iA}]), said blocks (Bᵢ) being organised according to a block chain constituting a sub-graph (SG_{A}) of a general graph (G_{C}) whereof the topology is defined by a preset data model, a root block (BR_{A}) of said sub-graph (SG_{A}) being associated with a public key (KPUBWD_{A}) of a digital wallet, said key (KPUBWD_{A}) being attributed to this user (A).

9. A server (SDP) for management of personal data of a plurality of users, this server comprising a processor configured to manage a general database (BD_{C}) in which blocks (Bᵢ) are recorded, each block (Bᵢ) comprising said personal data of a said user encrypted with a symmetric encryption key (KS_{A}) of this user, said blocks (Bᵢ) comprising the personal encrypted data of the same user being organised according to a block chain constituting a sub-graph (SG_{A}) of the same general graph (G_{C}) whereof the topology is defined by a preset data model, a root block (BR_{A}) of said sub-graph (SG_{A}) being associated with a public key (KPUBWD_{A}) of a digital wallet, said key (KPUBWD_{A}) being attributed to this user (A).

10. A computer program (P1) comprising instructions for the execution of a process for constitution of a history of personal data according to any one of claims 1 to 5 when said program is run by a computer.

11. The computer program (P2) comprising instructions for the execution of a process for management of personal data of a plurality of users according to any one of claims 6 or 7 when said program is run by a computer.
